# EUROPÄISCHE PATENTSCHRIFT

(11) **EP 3 324 516 B1**
(45) Veröffentlichungstag und Bekanntmachung des Hinweises auf die Patenterteilung: **31.03.2021**
(21) Anmeldenummer: 17197201.1
(22) Anmeldetag: 19.10.2017
(51) Int. Cl.: H02K 1/32, H02K 9/197, H02K 9/20

(54) **ELEKTRISCHE MASCHINE**
ELECTRIC MACHINE
MACHINE ÉLECTRIQUE

(30) Priorität: 21.11.2016 DE 102016222847
(43) Veröffentlichungstag der Anmeldung: 23.05.2018
(73) Patentinhaber: AUDI AG, 85045 Ingolstadt (DE)
(72) Erfinder: Schröder, Maximilian, 85055 Ingolstadt (DE)

(56) Entgegenhaltungen:
- EP-A1- 2 299 565
- WO-A1-2006/134057
- WO-A1-2016/119968
- US-A- 3 801 843

## Beschreibung

Die Erfindung betrifft eine elektrische Maschine mit einem Stator und einem bezüglich des Stators drehbar gelagerten und auf einer kühlbaren Welle angeordneten Rotor, wobei der Rotor über eine drehfest mit dem Rotor verbundene und stirnseitig an dem Rotor angeordnete Thermosiphoneinrichtung wärmeübertragend mit der Welle verbunden ist, wobei die Thermosiphoneinrichtung auf einer einem Rotorblechpaket des Rotors abgewandten Seite eines Kurzschlussrings des Rotors angeordnet oder mit dem Kurzschlussring integriert ausgestaltet ist, und wobei eine Fluidkammer der Thermosiphoneinrichtung wenigstens bereichsweise von dem Kurzschlussring oder einer an den Kurzschlussring angrenzenden Wandung der Thermosiphoneinrichtung begrenzt ist.

Die elektrische Maschine verfügt über den Stator, welcher vorzugsweise ortsfest in einem Maschinengehäuse der elektrischen Maschine angeordnet ist. Der Rotor ist dagegen bezüglich des Stators und mithin auch bezüglich des Maschinengehäuses drehbar gelagert. Beispielsweise ist der Rotor an und/oder in dem Maschinengehäuse drehbar gelagert, insbesondere mittels wenigstens eines Lagers, vorzugsweise eines Wälzlagers. Der Rotor ist dabei auf einer kühlbaren Welle angeordnet. Darunter kann verstanden werden, dass der Rotor und die Welle separat voneinander ausgebildet und nachfolgend aneinandergefügt werden. Es kann jedoch auch vorgesehen sein, dass die Welle integral mit dem Rotor ausgebildet ist.

Die Welle und mithin der Rotor sind im Längsschnitt bezüglich einer Drehachse der Welle gesehen vorzugsweise wenigstens bereichsweise innerhalb des Stators angeordnet. Beispielsweise durchgreift die Welle den Stator in axialer Richtung bezüglich der Drehachse vollständig, ragt also in axialer Richtung gesehen beidseitig über diesen hinaus.

Die Welle ist kühlbar. Das bedeutet zumindest, dass die Welle aus einem wärmeleitenden Material besteht, sodass der Welle zugeführte Wärme mittels Wärmeleitung abgeführt wird. Die Welle kann jedoch auch aktiv kühlbar sein, wozu ihr eine entsprechende Kühleinrichtung zugeordnet ist. Eine derartige Kühleinrichtung kann beispielsweise eine Hohlwellen- und/oder Lanzenkühlung sein. In ersterem Fall ist in der Welle wenigstens ein Kühlmittelkanal ausgebildet, welcher von Kühlmittel durchströmbar ist. Beispielsweise liegt die Welle hierzu als Hohlwelle vor.

Zusätzlich oder alternativ kann die Lanzenkühlung vorgesehen sein. Auch in diesem Fall ist die Welle wenigstens bereichsweise als Hohlwelle ausgestaltet. Bei dieser greift eine Kühllanze in die Welle ein, beispielsweise durch eine stirnseitig in der Welle ausgebildete Öffnung. Mittels der Kühllanze wird ein Kühlmittel in die Welle eingebracht, insbesondere eingespritzt. In beiden Fällen nimmt das Kühlmittel der Welle zugeführte Wärme auf und führt diese von der Welle ab.

Die elektrische Maschine kann zum Beispiel als eine Asynchronmaschine oder stromerregte Synchronmaschine ausgestaltet sein. Die Dauerleistungsdichte, also die Dauerleistung, die die elektrische Maschine bei einem bestimmten Gewicht und/oder einem bestimmten Volumen erbringen kann, ist in erster Linie thermisch limitiert. Bei rotorkritischen elektrischen Maschinen ist insbesondere die Wärmeabfuhr aus dem Rotor entscheidend für die zu erbringende Dauerleitungsdichte. Beispielsweise wird die an beziehungsweise in dem Rotor anfallende Wärme auf die beschriebene Art und Weise über die Welle abgeführt, insbesondere über die kühlbare oder aktiv gekühlte Welle. Zusätzlich oder alternativ ist auch eine Umluftkühlung möglich.

Aus der Druckschrift EP 2 299 565 A1 ist ein Käfigläufer für eine Asynchronmaschine bekannt, wobei der Käfigläufer ein Läuferblechpaket, innerhalb des Läuferblechpakets angeordnete Kurzschlussstäbe und an das Läuferblechpaket angegossene Kurzschlussringe, die die Kurzschlussstäbe an den Stirnseiten des Läuferblechpakets elektrisch miteinander verbinden, umfasst. Zur Verbesserung der Wärmeabfuhr sind in das Läuferblechpaket in axialer Richtung Wärmerohre eingelegt, die an den Stirnseiten aus dem Läuferblechpaket heraus- und in die Kurzschlussringe hineinragen.

Weiterhin ist aus der Druckschrift WO 2016/119968 A1 eine Kühlvorrichtung zur Kühlung eines um eine Rotationsachse drehbar gelagerten Rotors bekannt, wobei der Rotor von einer zentralen Rotorwelle getragen wird und einen Hohlraum im Inneren der Rotorwelle zur Aufnahme von Kühlmittel umfasst. Die Kühlvorrichtung weist wenigstens eine sich von dem Hohlraum radial nach außen erstreckende erste Kühlmittelleitung und eine über die erste Kühlmittelleitung mit dem Hohlraum fluidisch verbundene ringförmige erste Verteilerleitung auf.

Es ist Aufgabe der Erfindung, eine elektrische Maschine vorzuschlagen, welche gegenüber bekannten elektrischen Maschinen Vorteile aufweist, insbesondere effizienter kühlbar ist.

Dies wird erfindungsgemäß mit einer elektrischen Maschine mit den Merkmalen des Anspruchs 1 erreicht. Dabei ist vorgesehen, dass die Fluidkammer wenigstens bereichsweise von einem Außenumfang der Welle begrenzt ist und ein Kühlmittel innerhalb der Thermosiphoneinrichtung aufgrund der unterschiedlichen Temperaturen des Rotors und der Welle umgewälzt wird. Grundsätzlich ist vorgesehen, dass der Rotor über eine drehfest mit dem Rotor verbundene und stirnseitig an dem Rotor angeordnete Thermosiphoneinrichtung wärmeübertragend mit der Welle verbunden ist.

Die Kühlung der elektrischen Maschine wird entscheidend beeinflusst von der Wärmemenge, welche von dem Rotor auf die (kühlbare) Welle übertragbar und mithin von dem Rotor zu der Welle abführbar ist. Die radiale Wärmeleitfähigkeit des Rotors ist jedoch begrenzt. Dies gilt insbesondere für eine radiale Wärmeleitfähigkeit eines Blechpakets des Rotors, welche deutlich schlechter ist als die Wärmeleitfähigkeit eines Käfigs des Rotors. Aus diesem Grund ist die Thermosiphoneinrichtung vorgesehen, über welche eine Wärmeübertragungsverbindung zwischen dem Rotor und der Welle hergestellt ist.

Die Thermosiphoneinrichtung ist drehfest mit dem Rotor und/oder der Welle verbunden und stirnseitig an dem Rotor angeordnet. Das bedeutet, dass im Längsschnitt bezüglich der Drehachse der Welle gesehen die Thermosiphoneinrichtung neben dem Rotor, insbesondere unmittelbar neben dem Rotor, vorliegt. Bevorzugt grenzt die Thermosiphoneinrichtung unmittelbar an den Rotor an, ist also nicht von diesem beabstandet angeordnet. Grundsätzlich kann es ausreichend sein, lediglich eine derartige Thermosiphoneinrichtung an einer der Stirnseiten des Rotors vorzusehen. Bevorzugt sind jedoch mehrere Thermosiphoneinrichtungen der elektrischen Maschine zugeordnet, welche insbesondere auf gegenüberliegenden Seiten des Rotors angeordnet sind. Die Thermosiphoneinrichtungen sind vorzugsweise baugleich ausgestaltet, selbstredend jedoch spiegelbildlich bezüglich des Rotors ausgebildet.

In der Thermosiphoneinrichtung ist ein Kühlmittel angeordnet, welches innerhalb der Thermosiphoneinrichtung aufgrund der unterschiedlichen Temperaturen des Rotors und der Welle umgewälzt wird. Insbesondere ist das Kühlmittel derart gewählt, dass es bei einer Betriebstemperatur des Rotors verdampft und an der Welle, welche eine geringere Temperatur aufweist als der Rotor, kondensiert. Aufgrund der drehfesten Verbindung der Thermosiphoneinrichtung mit dem Rotor ist diese als Rotationsthermosiphoneinrichtung ausgebildet. Dessen Funktionsprinzip basiert darauf, dass das an der Welle kondensierende Kühlmittel aufgrund seiner im Vergleich zu verdampftem Kühlmittel erheblich größeren Dichte sowie der Drehbewegung der Welle nach außen geschleudert wird, also aufgrund der auf das von der Welle mitgenommene kondensierte Kühlmittel wirkenden Zentrifugalkraft. Vorzugsweise wird ein Kühlmittel verwendet, das in allen auftretenden Aggregatzuständen dielektrisch, also elektrisch nicht-leitend, ist. Insbesondere ist dies für die Aggregatzustände flüssig und gasförmig der Fall.

Das nach außen geschleuderte Kühlmittel gelangt zu in radialer Richtung weiter außen gelegenen Bereichen des Rotors, welche eine höhere Temperatur aufweisen als die Welle und/oder in radialer Richtung weiter innenliegende Bereiche des Rotors. Aufgrund der höheren Temperatur verdampft das Kühlmittel und wird von dem weiterhin nach außen geschleuderten Kühlmittel wieder in Richtung der Welle gedrängt, an welcher es kondensiert. Hierdurch entsteht ein Kreislauf des Kühlmittels, über welchen eine vergleichsweise große Wärmemenge pro Zeiteinheit von dem Rotor auf die Welle übertragen und über diese abgeführt werden kann.

Die Erfindung sieht vor, dass die Thermosiphoneinrichtung auf einer einem Rotorblechpaket des Rotors abgewandten Seite eines Kurzschlussrings des Rotors angeordnet oder mit dem Kurzschlussring integriert ausgestaltet ist. Der Rotor besteht beispielsweise aus einem Rotorblechpaket, einer Käfigwicklung sowie dem Kurzschlussring, wobei die Käfigwicklung allgemeiner als Rotorwicklung bezeichnet werden kann. Das Rotorblechpaket wiederum besteht aus einer Vielzahl von in axialer Richtung parallel und unmittelbar aneinander anliegend angeordneten Rotorblechen.

Auf das Rotorblechpaket ist die Käfigwicklung aufgebracht. In axialer Richtung wird die Käfigwicklung in axialer Richtung von dem Kurzschlussring abgeschlossen. Insbesondere liegt also auf in axialer Richtung gegenüberliegenden Seiten des Rotors jeweils ein derartiger Kurzschlussring vor. Der Kurzschlussring kann in radialer Richtung das Rotorblechpaket und die Käfigwicklung vollständig übergreifen, sodass er radial innen an der Welle anliegt. Er kann jedoch auch in radialer Richtung von der Welle beabstandet angeordnet sein, also das Rotorblechpaket und/oder die Käfigwicklung in radialer Richtung lediglich teilweise übergreifen.

Die Thermosiphoneinrichtung schließt sich nun in axialer Richtung gesehen an den Kurzschlussring an, insbesondere liegt sie an ihm an, sodass die Wärme aus dem Rotor über den Kurzschlussring an die Thermosiphoneinrichtung abgeführt wird. Alternativ kann selbstverständlich die Thermosiphoneinrichtung auch mit dem Kurzschlussring integriert ausgestaltet sein. Bevorzugt ist jedem Kurzschlussring des Rotors eine derartige Thermosiphoneinrichtung zugeordnet beziehungsweise mit ihm integriert ausgestaltet, sodass auf in axialer Richtung gegenüberliegenden Seiten des Rotors jeweils wenigstens eine derartige Thermosiphoneinrichtung vorliegt. Hierauf wurde vorstehend bereits hingewiesen.

Im Rahmen der Erfindung ist vorgesehen, dass eine Fluidkammer der Thermosiphoneinrichtung wenigstens bereichsweise von dem Kurzschlussring oder einer an den Kurzschlussring angrenzenden Wandung der Thermosiphoneinrichtung begrenzt ist. Die Fluidkammer der Thermosiphoneinrichtung dient der Aufnahme des Kühlmittels. Um einen besonders guten Wärmeübergang von dem Rotor auf das Kühlmittel zu erzielen, kann die Fluidkammer bereichsweise von dem Kurzschlussring begrenzt sein, sich also unmittelbar an diesen anschließen. Bevorzugt ist eine dem Rotor zugewandte Seite der Fluidkammer vollständig von dem Kurzschlussring begrenzt.

Alternativ kann selbstverständlich die Thermosiphoneinrichtung in Richtung des Rotors eine Wandung aufweisen, die die Fluidkammer in diese Richtung begrenzt. Diese Wandung liegt auf ihrer der Fluidkammer abgewandten Seite vorzugsweise an dem Kurzschlussring an.

Eine Weiterbildung der Erfindung sieht vor, dass an dem Kurzschlussring und/oder der Wandung in die Fluidkammer hineinragende Oberflächenvergrößerungselemente ausgehen. Die Oberflächenvergrößerungselemente dienen der Intensivierung des Wärmeübergangs zwischen dem Kurzschlussring beziehungsweise der Wandung und dem Kühlmittel. Die Oberflächenvergrößerungselemente können grundsätzlich beliebig ausgestaltet sein. Beispielsweise liegen sie in Form von Finnen, Flügeln, Winglets oder dergleichen vor. Die Oberflächenvergrößerungselemente sind an dem Kurzschlussring beziehungsweise der Wandung angeordnet beziehungsweise befestigt und ragen in die Fluidkammer hinein.

Die Erfindung sieht vor, dass die Fluidkammer wenigstens bereichsweise von einem Außenumfang der Welle begrenzt ist. Auf diese Weise kann der Wärmeübergang von dem Fluid auf die Welle besonders gut erfolgen, weil das Fluid unmittelbar mit der Welle beziehungsweise ihrem Außenumfang in Kontakt tritt.

Eine weitere bevorzugte Ausgestaltung der Erfindung sieht vor, dass die Thermosiphoneinrichtung bezüglich einer Drehachse der Welle radial innenliegend von der Welle ausgeht und in radialer Richtung nach außen den Rotor zumindest teilweise, insbesondere vollständig, übergreift. Die Thermosiphoneinrichtung geht insoweit in radialer Richtung gesehen von der Welle aus und erstreckt sich entlang des Rotors nach außen. Dabei übergreift sie ihn in radialer Richtung wenigstens teilweise, vorzugsweise jedoch vollständig. Insbesondere schließt die Thermosiphoneinrichtung in radialer Richtung außenliegend bündig mit dem Rotor, beispielsweise des Rotorblechpakets und/oder der Käfigwicklung, ab.

Im Rahmen einer weiteren Ausgestaltung der Erfindung ist vorgesehen, dass aus dem Kurzschlussring wenigstens ein Wärmetransportelement in die Fluidkammer hineinragt, insbesondere ein mit Oberflächenvergrößerungselementen versehenes Wärmetransportelement. Das Wärmetransportelement durchgreift den Rotor wenigstens bereichsweise und ragt in die Fluidkammer hinein. Das Wärmetransportelement dient insoweit der Intensivierung des Wärmetransports durch den Rotor hindurch in axialer Richtung, sodass die in dem Rotor vorliegende Wärme besser an das Kühlmittel übertragen werden kann. Das Wärmetransportelement kann analog zu dem Kurzschlussring beziehungsweise der Wandung mit Oberflächenvergrößerungselementen versehen sein. Diese können entsprechend ausgestaltet sein. Bevorzugt ist lediglich der in die Fluidkammer hineinragende Teil des Wärmetransportelements mit derartigen Oberflächenvergrößerungselementen versehen.

Eine weitere Ausgestaltung der Erfindung sieht vor, dass das Wärmetransportelement den Rotor in die von der Thermosiphoneinrichtung abgewandte Richtung wenigstens teilweise, insbesondere vollständig, durchgreift. Um einen möglichst intensiven Wärmetransport durch den Rotor hindurch in axialer Richtung zu ermöglichen, durchgreift das Wärmetransportelement diesen zumindest teilweise oder sogar vollständig. Unter dem teilweisen Durchgreifen ist bevorzugt ein Durchgreifen in axialer Richtung zu mindestens 10 %, mindestens 20 %, mindestens 25 %, mindestens 30 %, mindestens 40 %, mindestens 50 %, mindestens 60 %, mindestens 70 %, mindestens 75 %, mindestens 80 % oder mindestens 90 % zu verstehen. Das vollständige Durchgreifen entspricht einem Durchgreifen in axialer Richtung um 100 %.

Eine Weiterbildung der Erfindung sieht vor, dass das Wärmetransportelement an dem Rotorblechpaket und/oder einer Käfigwicklung des Rotors anliegt. Insbesondere durchgreift das Wärmetransportelement das Rotorblechpaket und/oder die Käfigwicklung in axialer Richtung auf die vorstehend genannte Art und Weise. Dabei stehen das Rotorblechpaket und/oder die Käfigwicklung in Wärmeübertragungsverbindung mit dem Wärmetransportelement und liegen hierzu an diesem an, vorzugsweise flächig. Zudem kann es vorgesehen sein, dass zur Verbesserung des Wärmeübergangs zwischen dem Rotorblechpaket und/oder der Käfigwicklung einerseits und des Wärmetransportelements andererseits zwischen ihnen ein Wärmeleitmittel eingebracht ist. Das Wärmeleitmittel ist vorzugsweise ein flüssiges und/oder pastöses Wärmeleitmittel.

Schließlich kann im Rahmen einer weiteren Ausgestaltung der Erfindung vorgesehen sein, dass das Wärmetransportelement als Wärmerohr, insbesondere als Heatpipe, ausgebildet ist. Mit einer derartigen Ausgestaltung kann eine besonders intensive Wärmeübertragung von dem Rotor auf das in der Fluidkammer befindliche Kühlmittel und mithin auf die Welle der elektrischen Maschine erzielt werden.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Längsschnittdarstellung einer elektrischen Maschine, mit einem Stator und einem bezüglich des Stators drehbar gelagerten und auf einer kühlbaren Welle angeordneten Rotor, wobei beiderseits des Rotors eine Thermosiphoneinrichtung angeordnet ist, und
- Figur 2: eine Detailschnittdarstellung der elektrischen Maschine, wobei eine der Thermosiphoneinrichtungen vergrößert dargestellt ist.

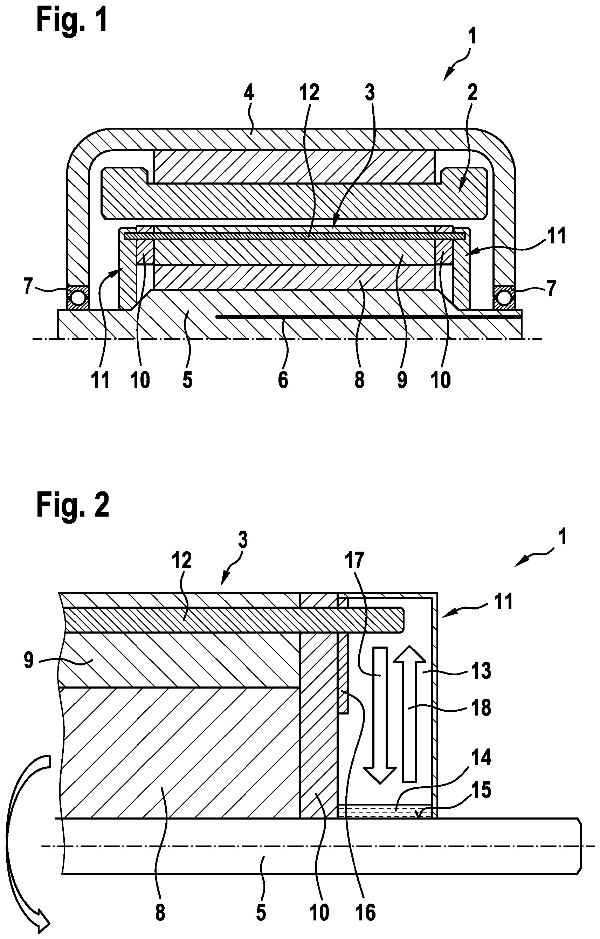

Die Figur 1 zeigt eine Längsschnittdarstellung durch eine elektrische Maschine 1, die über einen Stator 2 sowie einen Rotor 3 verfügt, die in einem Maschinengehäuse 4 der elektrischen Maschine 1 angeordnet sind. Der Rotor 3 sitzt auf einer drehbar gelagerten Welle 5, welche vorzugsweise aktiv kühlbar ist, insbesondere mittels einer sich in axialer Richtung in die Welle 5 hineinerstreckenden Kühlmittellanze 6. Die Welle 5 ist über wenigstens ein Lager 7 (hier: zwei Lager 7) an dem Maschinengehäuse 4 drehbar gelagert. Das Lager 7 ist vorzugsweise als Wälzlager ausgestaltet. Der Rotor 3 besteht aus einem auf der Welle 5 aufsitzenden Rotorblechpaket 8, an welchem eine Käfigwicklung 9 angeordnet ist. Stirnseitig wird der Rotor 3 jeweils von einem Kurzschlussring 10 begrenzt, in dem hier dargestellten Ausführungsbeispiel also von zwei Kurzschlussringen 10, die auf gegenüberliegenden Seiten des Rotors 3 angeordnet sind.

Um aus dem Rotor 3 effektiv Wärme abführen zu können, sind wenigstens eine Thermosiphoneinrichtung 11, in dem hier dargestellten Ausführungsbeispiel zwei Thermosiphoneinrichtungen 11, vorgesehen. Die Thermosiphoneinrichtungen 11 sind auf gegenüberliegenden Seiten des Rotors 3 angeordnet und drehfest mit dem Rotor 3 beziehungsweise der Welle 5 verbunden. Jede der Thermosiphoneinrichtungen 11 liegt stirnseitig an dem Rotor 3 an, insbesondere an dem Kurzschlussring 10. Es kann jedoch auch vorgesehen sein, dass die Thermosiphoneinrichtungen 11 beziehungsweise eine der Thermosiphoneinrichtungen 11 integral mit den Kurzschlussringen 10 beziehungsweise einem der Kurzschlussringe 10 ausgestaltet sind. Nachfolgend wird lediglich auf eine der Thermosiphoneinrichtungen 11 näher eingegangen. Die Ausführungen sind jedoch stets analog auf die jeweils andere Thermosiphoneinrichtung 11 beziehungsweise beide Thermosiphoneinrichtungen 11 übertragbar.

Zur weiteren Verbesserung des Wärmeübergangs zwischen dem Rotor 3 und der Welle 5 ist ein Wärmetransportelement 12 vorgesehen, das den Rotor 3 in axialer Richtung gesehen vollständig übergreift und beidseitig über diesen hinausragt. Dabei greift das Wärmetransportelement 12 mit seinen in axialer Richtung gegenüberliegenden Enden jeweils in eine der Thermosiphoneinrichtungen 11 ein. Über das Wärmetransportelement 12 sind also der Rotor 3 und die Thermosiphoneinrichtungen 11 thermisch gekoppelt.

Die Figur 2 zeigt eine Detailschnittdarstellung der elektrischen Maschine 1 im Bereich der Thermosiphoneinrichtung 11. Es wird deutlich, dass die Thermosiphoneinrichtung 11 eine Fluidkammer 13 aufweist, in welcher ein hier lediglich angedeutetes Kühlmittel 14 vorliegt. Die Fluidkammer 13 wird sowohl von dem Kurzschlussring 10 als auch von der Welle 5 beziehungsweise einem Außenumfang 15 der Welle 5 wenigstens bereichsweise begrenzt. Das bedeutet, dass das Kühlmittel 14 sowohl mit dem Kurzschlussring 10 als auch der Welle 5 jeweils unmittelbar in Kontakt treten beziehungsweise diese benetzen kann.

Es wird nochmals deutlich, dass das Wärmetransportelement 12 in axialer Richtung über den Rotor 3 übersteht und dabei den Kurzschlussring 10 durchgreift. Das Wärmetransportelement 12 ragt in die Fluidkammer 13 ein. Es durchgreift diese in axialer Richtung bevorzugt lediglich teilweise. An dem Kurzschlussring 10 sind Oberflächenvergrößerungselemente 16 angeordnet beziehungsweise befestigt, die in die Fluidkammer 13 hineinragen. Die Oberflächenvergrößerungselemente 16 dienen einer Vergrößerung der effektiven Oberfläche des mit dem Kühlmittel in Kontakt stehenden Bereichs des Kurzschlussrings 10.

Während des Betriebs der elektrischen Maschine 1 erwärmt sich der Rotor 3. Die in dem Rotor 3 anfallende Wärme wird wenigstens teilweise mittels des Wärmetransportelements 12, welches bevorzugt als Heatpipe ausgestaltet ist, in axialer Richtung hin zu der Thermosiphoneinrichtung 11, insbesondere bis in die Fluidkammer 13 hinein, transportiert. Auch über den Kurzschlussring 10 kann Wärme der Thermosiphoneinrichtung 11 beziehungsweise dem Kühlmittel zugeführt werden. Dieses verdampft und gelangt in Richtung des Pfeils 17 in radialer Richtung nach innen hin zu der Welle 5, welche eine geringere Temperatur aufweist als der Rotor 3. Insbesondere ist die Temperatur der Welle 5 derart eingestellt, dass das verdampfte Kühlmittel an ihr kondensiert.

Das kondensierte Kühlmittel wird in Umfangsrichtung von der Welle 5 mitgenommen und aufgrund des Zentrifugalkrafteinflusses in radialer Richtung nach außen geschleudert. Dies ist durch den Pfeil 18 dargestellt. Das nach außen geschleuderte Kühlmittel verdrängt wiederum bereits verdampftes Kühlmittel, sodass dieses in Richtung des Pfeils 17 in radialer Richtung nach innen gelangt. Zudem nimmt das zunächst kondensierte Kühlmittel erneut Wärme auf und verdampft entsprechend erneut, sodass es wieder in radialer Richtung nach innen gelangt.

Mit einer derartigen Ausgestaltung der elektrischen Maschine 1 kann eine deutlich größere Wärmemenge aus der elektrischen Maschine 1, insbesondere aus ihrem Rotor 3, in Richtung der Welle 5 abgeführt werden als bei herkömmlichen elektrischen Maschinen. Zudem wird eine homogenere Temperaturverteilung innerhalb der elektrischen Maschine 1 erzielt.

## Patentansprüche

1. Elektrische Maschine (1) mit einem Stator (2) und einem bezüglich des Stators (2) drehbar gelagerten und auf einer kühlbaren Welle (5) angeordneten Rotor (3), wobei der Rotor (3) über eine drehfest mit dem Rotor (3) verbundene und stirnseitig an dem Rotor (3) angeordnete Thermosiphoneinrichtung (11) wärmeübertragend mit der Welle (5) verbunden ist, wobei die Thermosiphoneinrichtung (11) auf einer einem Rotorblechpaket (8) des Rotors (3) abgewandten Seite eines Kurzschlussrings (10) des Rotors (3) angeordnet oder mit dem Kurzschlussring (10) integriert ausgestaltet ist, und wobei eine Fluidkammer (13) der Thermosiphoneinrichtung (11) wenigstens bereichsweise von dem Kurzschlussring (10) oder einer an den Kurzschlussring (10) angrenzenden Wandung der Thermosiphoneinrichtung (11) begrenzt ist, **dadurch gekennzeichnet, dass** die Fluidkammer (13) wenigstens bereichsweise von einem Außenumfang (15) der Welle (5) begrenzt ist und ein Kühlmittel innerhalb der Thermosiphoneinrichtung (11) aufgrund der unterschiedlichen Temperaturen des Rotors (3) und der Welle (5) umgewälzt wird.

2. Elektrische Maschine nach Anspruch 1, **dadurch gekennzeichnet, dass** von dem Kurzschlussring (10) und/oder der Wandung in die Fluidkammer (13) hineinragende Oberflächenvergrößerungselemente (16) ausgehen.

3. Elektrische Maschine nach einem der vorhergehenden Ansprüche, **dadurch gekennzeichnet, dass** die Thermosiphoneinrichtung (11) bezüglich einer Drehachse der Welle (5) radial innenliegend von der Welle (5) ausgeht und in radialer Richtung nach außen den Rotor (3) zumindest teilweise, insbesondere vollständig, übergreift.

4. Elektrische Maschine nach einem der vorhergehenden Ansprüche, **dadurch gekennzeichnet, dass** aus dem Kurzschlussring (10) wenigstens ein Wärmetransportelement (12) in die Fluidkammer (13) hineinragt, insbesondere ein mit Oberflächenvergrößerungselementen versehenes Wärmetransportelement (12).

5. Elektrische Maschine nach Anspruch 4, **dadurch gekennzeichnet, dass** das Wärmetransportelement (12) den Rotor (3) in die von der Thermosiphoneinrichtung (11) abgewandte Richtung wenigstens teilweise, insbesondere vollständig, durchgreift.

6. Elektrische Maschine nach Anspruch 4 oder 5, **dadurch gekennzeichnet, dass** das Wärmetransportelement (12) an dem Rotorblechpaket (8) und/oder einer Käfigwicklung (9) des Rotors (3) anliegt.

7. Elektrische Maschine nach einem der Ansprüche 4 bis 6, **dadurch gekennzeichnet, dass** das Wärmetransportelement (12) als Wärmerohr, insbesondere als Heatpipe, ausgebildet ist.

## Claims

1. Electric machine (1) having a stator (2) and a rotor (3) which is rotatably mounted with respect to the stator (2) on a coolable shaft (5), wherein the rotor (3) is connected in a heat-transmitting manner to the shaft (5) via a thermosiphon apparatus (11), which is non-rotatably connected to the rotor (3) and arranged on the front face of the rotor (3), wherein the thermosiphon apparatus (11) is arranged on a side of a short-circuit ring (10) of the rotor (3) facing away from a laminated core (8) of the rotor (3) or is designed so as to be integrated with the short-circuit ring (10), and wherein a fluid chamber (13) of the thermosiphon apparatus (11) is delimited at least in regions by the short-circuit ring (10) or by a wall of the thermosiphon apparatus (11) adjacent to the short-circuit ring (10), **characterised in that** the fluid chamber (13) is delimited at least in regions by an outer circumference (15) of the shaft (5) and a coolant is circulated within the thermosiphon apparatus (11) due to the different temperatures of the rotor (3) and the shaft (5).

2. Electric machine according to claim 1, **characterised in that** surface-enlarging elements (16) extend from the short-circuit ring (10) and/or from the wall into the fluid chamber (13).

3. Electric machine according to any of the preceding claims, **characterised in that** the thermosiphon apparatus (11) extends radially inwards from the shaft (5) with respect to an axis of rotation of the shaft (5), and overlaps the rotor (3) outwards in the radial direction at least partially, in particular completely.

4. Electric machine according to any of the preceding claims, **characterised in that** at least one heat transport element (12) projects from the short-circuit ring (10) into the fluid chamber (13), in particular a heat transport element (12) provided with surface-enlarging elements.

5. Electric machine according to claim 4, **characterised in that** the heat transport element (12) passes at least partially, in particular completely, through the rotor (3) in the direction facing away from the thermosiphon apparatus (11).

6. Electric machine according to claim 4 or 5, **characterised in that** the heat transport element (12) rests against the rotor laminated core (8) and/or a cage winding (9) of the rotor (3).

7. Electric machine according to any of claims 4 to 6, **characterised in that** the heat transport element (12) is formed as a heat tube, in particular as a heat pipe.

## Revendications

1. Machine électrique (1) avec un stator (2) et un rotor (3) fixé de manière rotative par rapport au stator (2) et disposé sur un arbre pouvant être refroidi (5), dans lequel le rotor (3) est relié à l'arbre (5) par échange thermique par le biais d'un dispositif de thermosiphon (11) relié de manière fixe en rotation avec le rotor (3) et disposé frontalement au niveau du rotor (3), dans laquelle le dispositif de thermosiphon (11) est disposé sur une face d'une bague de court-circuit (10) du rotor (3) opposée à un paquet de tôles de rotor (8) du rotor (3) ou est agencé intégré à la bague de court-circuit (10) et dans lequel un compartiment de fluide (13) du dispositif de thermosiphon (11) est délimité au moins par zones par la bague de court-circuit (10) ou une paroi du dispositif de thermosiphon (11) adjacente à la bague de court-circuit (10), **caractérisée en ce que** le compartiment de fluide (13) est délimité au moins par endroits par une périphérie externe (15) de l'arbre (5) et un agent réfrigérant circule à l'intérieur du dispositif de thermosiphon (11) en raison des différentes températures du rotor (3) et de l'arbre (5).

2. Machine électrique selon la revendication 1, **caractérisée en ce que** des éléments d'agrandissement de surface (16) faisant saillie dans le compartiment de fluide (13) sortent de la bague de court-circuit (10) et/ou de la paroi.

3. Machine électrique selon l'une des revendications précédentes, **caractérisée en ce que** le dispositif de thermosiphon (11) sort de l'arbre (5) radialement à l'intérieur par rapport à un axe de rotation de l'arbre (5) et étend le rotor (3) au moins partiellement, en particulier entièrement, dans la direction radiale vers l'extérieur.

4. Machine électrique selon l'une des revendications précédentes, **caractérisée en ce qu'**au moins un élément caloriporteur (12) fait saillie dans le compartiment de fluide (13) à partir de la bague de court-circuit (10), en particulier un élément caloriporteur (12) doté d'éléments d'agrandissement de surface.

5. Machine électrique selon la revendication 4, **caractérisée en ce que** l'élément caloriporteur (12) pénètre au moins partiellement, en particulier intégralement, dans le rotor (3) dans la direction opposée au dispositif de thermosiphon (11).

6. Machine électrique selon la revendication 4 ou 5, **caractérisée en ce que** l'élément caloriporteur (12) repose au niveau du paquet de tôles de rotor (8) et/ou d'un enroulement à cage d'écureuil (9) du rotor (3).

7. Machine électrique selon l'une des revendications 4 à 6, **caractérisée en ce que** l'élément caloriporteur (12) est réalisé en tant que tube de chauffe, en particulier en tant que caloduc.
